# EUROPEAN PATENT APPLICATION

(11) **EP 4 494 993 A1**
(43) Date of publication of application: **22.01.2025**
(21) Application number: 24177458.7
(22) Date of filing: 22.05.2024
(51) Int. Cl.: B63B 27/14, B65G 69/28

(54) **FLAP SECTION FOR A SHIP RAMP**

(30) Priority: 22.06.2023 SE 2350772
(71) Applicant: Macgregor Sweden AB, 400 40 Göteborg (SE)
(72) Inventor: GÖRANSSON LYSELL, Magnus, 413 10 Göteborg (SE)
(74) Representative: Bergenstråhle & Partners AB

(57) **Abstract**

A flap section (200) for a flap comprised in a ship access ramp, comprising a front-end region (210) and a rear-end region (220), where the flap section is made of polymeric material and that the flap section is adapted to be removably attached to a flap, wherein said flap section comprises in said rear-end region a fastening section (230) comprising in an upper surface (232) at least one transverse upper groove (234) and in a lower surface (231) at least one transverse lower groove (233). An end piece (100) for a flap, a flap and a kit are also provided.

## Description

### Technical field

The present invention relates generally to flaps for ship access ramps and more particularly to a removable flap section which may be replaced in an easy way when it is damaged or worn.

### Background art

Ships adapted to carry vehicles of some kind are referred to as roll-om/roll-off (Ro-Ro) ships. A Ro-Ro ship is a vessel designed to carry wheeled cargo, such as cars, trucks, semi-trailer trucks, trailers, and railroad cars, that are driven on and off the ship on their own wheels or using a platform vehicle, such as a self-propelled modular transporter.

Ro-Ro ships have either built-in or shore-based ramps that allow the cargo to be efficiently rolled on and off the ship when landing the cargo in port. Most large ships have built in ramps, which may also function as watertight doors, closing the interior of the ship. A ramp may be located in the stern, in the bow or in a side, or may be located in more than one location. There may also be various ramps installed inside a ship, to allow vehicles to move between different levels of the ship.

There are different types of ramps, adapted to the use of the ramp and on the location on the ship. A ramp may be controlled by hydraulic cylinders or by wires. Common for all ramps is that the end region of the ramp, the part of the ramp that will be in contact with the support ground, comprises at least one hinged flap, and most commonly the ramp will comprise a plurality of hinged flaps, arranged side by side. The flaps are adapted to compensate for different heights of the ground and for uneven grounds. A flap may be between 1 to 3 meters wide, and the width of the flap is normally in the region of 2 meters. For a flap installed internally in a ship, where the support surface is even, the ramp may comprise a single flap covering the complete width of the ramp. Such a flap may be up to 10 meters wide. A flap is made of steel and is at the outer edge relatively thin, such that a vehicle can drive over the edge without problems. The edge should therefore be less than 2cm high, and preferably less than that.

One problem with the flaps is that they make noise when a vehicle drives over the flap. Since the ground is not completely flat, the flap does only bear against the ground at some points. The flap will thus tilt some when a vehicle drives on it, which creates a noise. This may be a problem, especially for ships landing in city centers, where noise levels may be regulated by law. A further problem with the created noise is that the working environment for the ship crew and for the vehicle drivers, especially for the drivers that drives trailers onto the ship.

A solution to the above-mentioned problem can be found in WO2019004921. In WO2019004921 the flap is provided with a removable flap section which is flexible and therefore reduces or eliminates the noise when vehicles drives on it. However, one problem with the removable flap section presented in WO2019004921 is that the replacement of a worn out or broken flap section may be relatively complicated and time consuming.

There is thus room for an improved removable flap section design.

### Summary of invention

An object of the present invention is therefore to provide an improved removable flap section for a flap comprised in a ship ramp. A further object of the invention is to provide a flap comprised in a ship access ramp. Yet another object of the present invention is to provide an end piece for a flap comprised in a ship access ramp.

The solution to the problem according to the invention is described in the characterizing portion of claim 1. Claim 12 contains an advantageous end piece and claim 20 contains an advantageous flap.

In a first aspect of the present invention it is provided a flap section for a flap comprised in a ship access ramp, comprising a front-end region and a rear-end region, where the flap section is made of polymeric material and that the flap section is adapted to be removably attached to a flap, wherein said flap section comprising in said rear-end region a fastening section comprising in an upper surface at least one transverse upper groove and in a lower surface at least one transverse lower groove

An advantage of the present invention is that the flap section may be easily removed and installed in a flap of a ship access ramp.

In various example embodiments of the present invention the height of the rear-end region is greater than the height of the front-end region.

The advantage of these embodiments is that the vehicles may enter the ship access ramp with minimum effort. Another advantage of these embodiments is that it further reduces the noise of the flap section onto support ground when vehicles is entering said flap section.

In various example embodiments of the present invention said upper groove is provided in a transverse upper recess in said fastening section and said lower groove is provided in a transverse lower recess in said fastening section.

The advantage of these embodiments is that an upper surface and/or a lower surface of the flap section may be configured to be flush with an upper and/or a lower surface of the flap when installed to the same.

In various example embodiments of the present invention a lower surface of the flap section may be flat or having any other shape corresponding to the shape of the support ground.

The advantage of these embodiments is that the flap section may have any suitable shape corresponding to the support ground onto which it is to be provided.

In various example embodiments of the present an upper surface of the flap section comprises a plurality of protruding transverse ribs.

The advantage of these embodiments is that they may provide for anti-slip functionality for vehicles entering and/or leaving the ship.

In various example embodiments of the present invention said flap section is configured to be removably attached to an end piece of said flap.

The advantage of these embodiments is that the flap section may be substituted when damaged, worn and/or for adapting to a particular support ground.

In various example embodiments of the present invention said end piece is configured to be attached to said flap with at least one screw joint. The end piece may be made of metal material.

The advantage of these embodiments is that the end piece may be easily removable from the flap.

In various example embodiments of the present invention said end piece is welded onto said flap.

The advantage of these embodiments is that it provides for a strong and quick installation.

In various example embodiments of the present invention said fastening section of said flap section is configured to be clamped in between an upper flange and a lower flange of said end piece.

The advantage of these embodiments is that it provides for an easy installation.

In various example embodiments of the present invention at least one of said upper flange and/or said lower flange is configured to be removably attached to said end piece.

The advantage of these embodiments is that the flap section may be easily substituted with another flap section.

In another aspect of the present invention, it is provided an end piece for a flap comprised in a ship access ramp, wherein said end piece comprising an upper flange and a lower flange at a predetermined distance from each other, said upper flange is provided with a transverse upper protrusion pointing towards said lower flange, said lower flange is provided with a transverse lower protrusion pointing towards said upper flange. At least one of said upper and/or lower flanges are removably attached to said end piece.

The advantage of these embodiments is that flaps in a ship access ramp may be provided with said end piece for attaching a flap section when manufacturing said flap. Alternatively said end piece may be installed retrospectively on the flap in a used ship for providing a flap section which may reduce the noise of vehicles entering and/or leaving the ship.

In various example embodiments said upper protrusion in said upper flange is configured to cooperate with a transverse upper groove of a flap section and wherein said lower protrusion in said lower flange is configured to cooperate with the transverse lower groove in said flap section.

The advantage of these embodiments is that is provides for a strong, easy and flexible installation of the flap section to said end piece.

In various example embodiments said end piece is configured to be attached to said flap with at least one screw joint. Alternatively said end piece may be welded onto said flap.

The advantage of these embodiments is that the end piece may be made for different installations methods to said flap.

In various example embodiments said upper and/or lower flanges are attached to a base section of said end piece with at least one screw joint.

The advantage of these embodiments is that it provides for multiple easy installation of flap sections. This may be made when the flap section is damages, worn or use of a different design of a flap section which may be adapted to different shapes of different support grounds.

In various example embodiments of the present invention wherein said upper flange is provided with a sloping angle with respect to the lower flange which is less than 10 degrees. The sloping angle of said upper flange may essentially be the same as a sloping angle of an upper surface of said flap section with respect to a lower surface of said flap section.

The advantage of these embodiments is that it provides for a smooth transition from the flap section to the flap.

In another aspect of the present invention, it provides for a kit comprising a flap section and an end piece configured for a flap comprised in a ship access ramp. The kit may comprise one or a plurality of different types of end pieces suitable to fit different types of flaps. The difference between different end pieces may be the distance between a lower flange and an upper flange and/or the slope of the upper flange with respect to the lower flange. Said kit may comprise one or a plurality of flap section suitable to be installed with said one or plurality of end pieces. The kit may be sold in various forms, one end piece together with one flap section, multiple end pieces together with multiple flap section.

### Brief description of drawings

The invention is now described, by way of example, with reference to the accompanying drawings, in which:
Fig. 1 shows a side view of an end piece according to the present invention for a flap comprised in a ship access ramp.
Fig. 2 shows a perspective view of an end piece according to the present invention for a flap comprised in a ship access ramp.
Fig. 3 shows a side view of a flap section according to the present invention for a flap comprised in a ship access ramp.
Figure 4 shows a side view of an end piece provided with a flap section according to the present invention, wherein said end piece is attached to a flap in a ship access ramp.
Fig. 5 shows a view from above of an example embodiment of a flap section according to the present invention.

### Description of embodiments

The embodiments of the invention with further developments described in the following are to be regarded only as examples and are in no way to limit the scope of the protection provided by the patent claims.

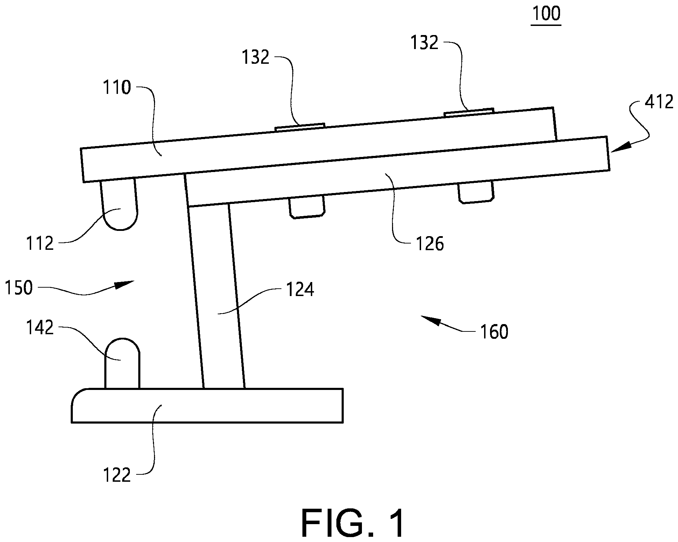

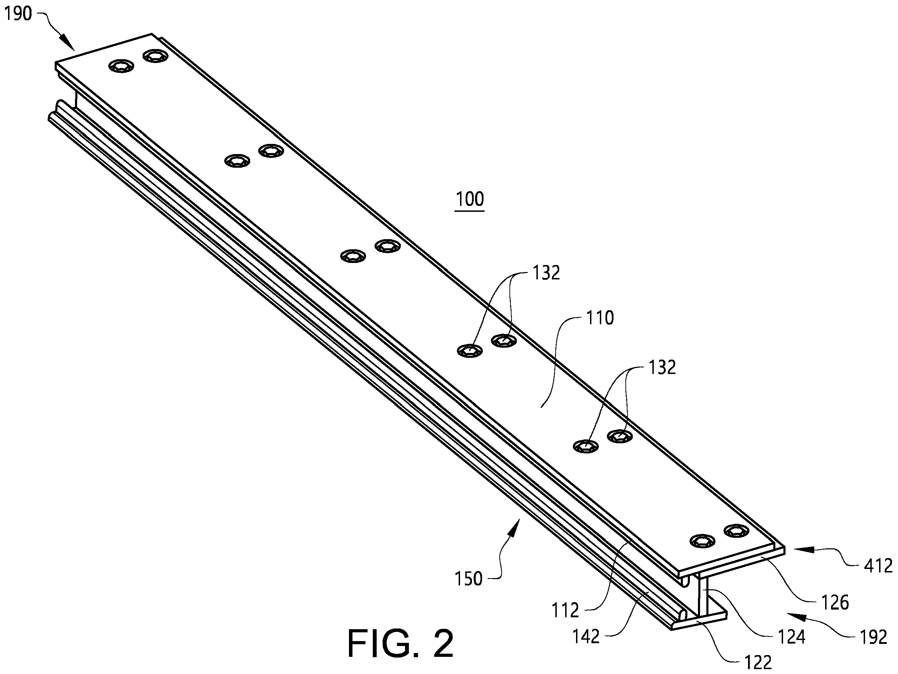

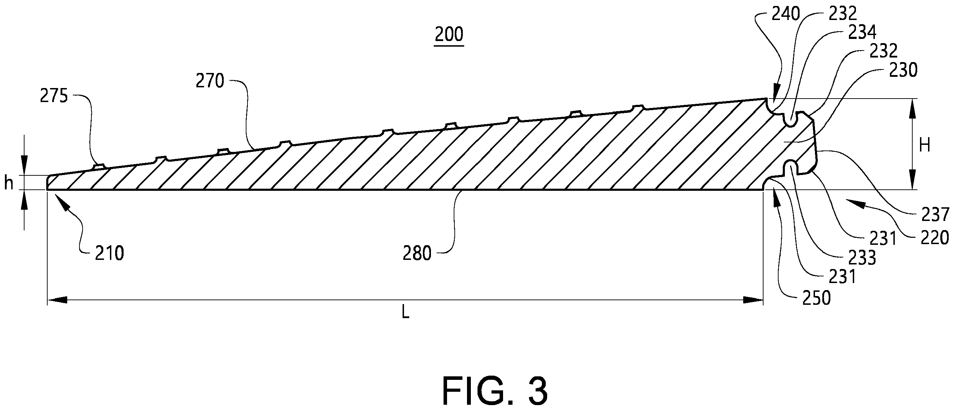

Fig. 1 and 2 shows a side view and perspective view respectively of an end piece 100 according to the present invention for a flap comprised in a ship access ramp. Figure 3 shows a side view of a flap section 200 according to the present invention for a flap comprised in a ship access ramp. The flap section 100 may be molded from a polymeric material such as a plastic material, but it would also be possible to produce a flap section 200 in rubber, or to use a two-component production method, with a stiffer inner material and a softer outer material. The flap section 200 may be extruded. A desirable length of a flap section may be cut from the extruded part. The polymeric material is well suited for absorbing noise since it is softer/more flexible than the metal material in the rest of the flap. The flap section 200 may be made of a single polymeric material throughout the flap section. Alternatively, the flap section may be made of at least two different types of polymeric material in a sandwich structure. The sandwich structure may have two or more layers of material. The different layers may have different sound absorbing characteristics, strength, and flexibility. The flap section 200 is provided with an upper surface 270 and a lower surface 280. The layers in the sandwich structure may be in parallel with the upper surface 270 or the lower surface 280.

The upper surface 270 may be provided with non-slip pattern for vehicles and/or pedestrians comprising transverse protruding ribs 275. Other non-slip patterns are also possible such as a chevron pattern or circular studs. The lower surface 280 may be essentially flat but could also be provided with some kind of surface pattern. The lower surface 280 may be provided with voids in order to save weight. However, it is important that said voids does not reduce the stability of the flap section 200.

The flap section 200 is further provided with a front-end region 210 and a rear end region 220. The front-end region 210 will make up the outer part of the flap section 200 and is the region which a vehicle will hit first when driving onto a ship. The height h of the front-end region 210 is thus the lowest part of the flap section 200. The rear end region 220 is the end of the flap section 200 which is adapted to be mounted to a flap of a ramp in a ship. The height H of the rear-end region 220 is thus the highest part of the flap section 200. The rear-end region 220 may be provided with a transverse upper recess 240 and a transverse lower recess 250 as depicted in figure 3. A fastening section 230 in the rear-end region 220 of said flap section 200 is adapted to cooperate with a clamping section 150 in an end piece 100. The upper recess 240 is adapted to cooperate with an upper flange 110 of the end piece 100 and the lower recess 250 is adapted to cooperate with a lower flange 122 of the end piece 100. An upper groove 234 in an upper surface 232 of the fastening section 230 is adapted to cooperate with an upper protrusion 112 in an upper flange 110 of said end piece 100. A lower groove 233 in a lower surface 231 of the fastening section 230 is adapted to cooperate with a lower protrusion 142 in a lower flange 122 of said end piece 100. At least one of said upper and/or lower flanges 110, 122 respectively is removable from said end piece 100. The fastening section 230, when provided in between said upper flange 110 and lower flange 122, will provide a secure hold of the flap section 200. The fastening section may be installed in between said upper flange 100 and the lower flange 122 by removing one or both of said flanges 110, 122, provide a rear surface 237 of the fastening section 230 towards a vertical base member 124 of said end piece 100. In figure 100 the upper removable flange 110 is attached to a horizontal base member 126 of the end piece 100 by means of one or a plurality of screw joints 132.

The length L of the of a flap section 200 may vary and is adapted to the dimensions of the flap onto which it is to be mounted. A suitable length may be between 0.4 to 0.9 m. The angle between the upper surface 270 and the lower surface 280 may also depend on the flap onto which it is to be mounted, but an angle less than 10 degrees may be suitable.

The end piece 100 may be welded onto a flap comprised in a ship access ramp. The end piece comprises a left side 190 and a right side 192. The transverse upper protrusion 112 in the upper flange 110 goes from one side to the other, i.e., the left side 190 of the end piece 100 to the right side 192 of the end piece 100. The transverse lower protrusion 142 in the lower flange 122 also goes from one side to the other, i.e., the left side 190 of the end piece 100 to a right side 192 of the end piece.

The lower flange 122 of the and piece 100 is configured to be essentially in parallel with the lower surface 280 of the flap section 200. The upper flange 110 of the end piece 100 is configured to the essentially in parallel with the upper surface 270 of the flap section 200. In figure 1 only the upper flange is removable from the end piece 100. However, the lower flange 122 may also be removable in addition to or in substitution to the removable upper flange 110.

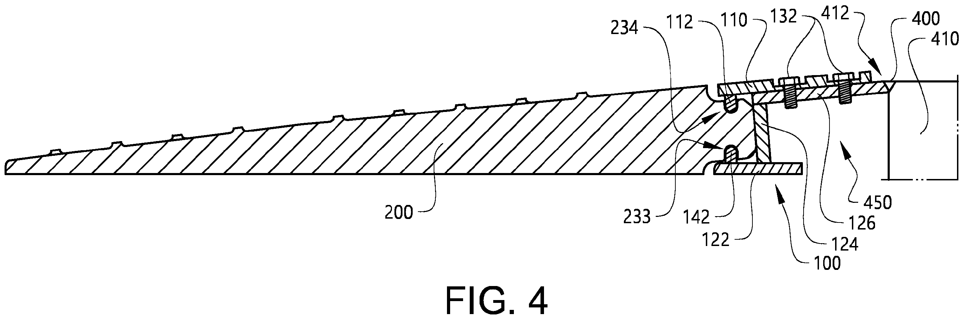

Figure 4 illustrates a side view of an end piece 100 provided with a flap section 200 according to the present invention, wherein said end piece 100 is attached to a flap 410 in a ship access ramp. An open end 412 of the horizontal base member 126 of the end piece 100 is welded onto said flap. In figure 4 a weld is denoted by 412. The welding may preferably be made from above as the space for welding from below is limited. An opening 450 is present between said end piece 100 and said flap 410 for access to the screw joint 132 from below.

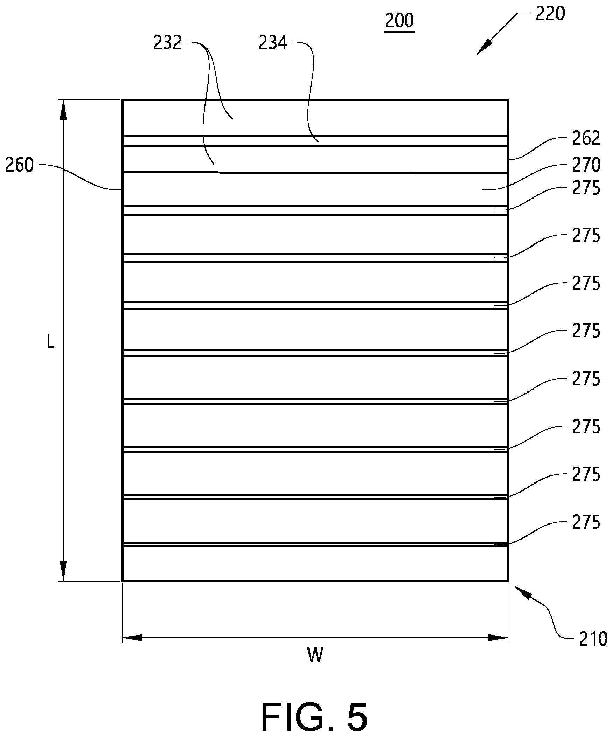

Figure 5 illustrates a top view of a flap section 200 according to the present invention. The upper surface 270 comprises the transverse protruding ribs 275 and the upper groove 234 is provided in the upper surface 232 of the fastening section 230. The transverse groove 233, 234 goes from one side to the other, i.e., from a left side 260 to a right side 262 of said flap section. The transverse protruding ribs 275 also goes from one side to the other, i.e., from a left side 260 to a right side 262 of the flap section 200. The width, from the left side to the right side, of the flap section 200 is denoted with W and the length of the flap section 200 is denoted with L.

Flaps may be provided with a single flap section covering the full width of the flap or with plurality of flap sections covering the full width of the flap.

The invention is not to be regarded as being limited to the embodiments described above, a number of additional variants and modifications being possible within the scope of the subsequent patent claims. The flap section may have any size and may be made from any suitable material. Instead of a single protrusion in the upper and lower flanges adapted to cooperate with corresponding grooves in the flap section may be two or more alternative embodiments. The upper and/or the lower flange may be a single unit or several units. The several flaps may be installed with gaps in between each other.

## Claims

1. A flap section (200) for a flap comprised in a ship access ramp, comprising a front-end region (210) and a rear-end region (220), where the flap section (200) is made of polymeric material and that the flap section (200) is adapted to be removably attached to a flap, **characterized in that** said flap section (200) comprising in said rear-end region (220) a fastening section (230) comprising in an upper surface (232) at least one transverse upper groove (234) and in a lower surface (231) at least one transverse lower groove (233).

2. The flap section (200) according to claim 1, where the height of the rear-end region (220) is greater than the height of the front-end region (210).

3. The flap section (200) according to claim 1 or 2, wherein said upper groove (234) is provided in a transverse upper recess (240) in said fastening section (230) and said lower groove (233) is provided in a transverse lower recess (250) in said fastening section (230).

4. The flap section (200) according to any one of claim 1-3, wherein a lower surface (280) of the flap section (200) is flat.

5. The flap section (200) according to any one of claim 1-4, wherein an upper surface (270) of the flap section (200) comprises a plurality of protruding transverse ribs (275).

6. The flap section (200) according to any one of claim 1-5, wherein said flap section (200) is configured to be removably attached to an end piece (100) of said flap.

7. The flap section (200) according to any one of claim 6, wherein said fastening section (230) of said flap section (200) is configured to be clamped in between an upper flange (110) and a lower flange (122) of said end piece (100).

8. An end piece (100) for a flap comprised in a ship access ramp, wherein said end piece (100) comprising an upper flange (110) and a lower flange (122) at a predetermined distance from each other, said upper flange (110) is provided with a transverse upper protrusion (112) pointing towards said lower flange (122), said lower flange (122) is provided with a transverse lower protrusion (142) pointing towards said upper flange (110), **characterized in that** at least one of said upper and/or lower flanges (110, 122) are removably attached to said end piece (100).

9. The end piece (100) according to claim 8, wherein said upper protrusion (112) in said upper flange (110) is configured to cooperate with a transverse upper groove (234) of a flap section (200) and wherein said lower protrusion (142) in said lower flange (122) is configured to cooperate with the transverse lower groove (233) in said flap section (200).

10. The end piece (100) according to any one of claim 8 or 9, wherein said end piece (100) is configured to be attached to said flap with at least one screw joint.

11. The end piece (100) according to any one of claim 8 or 9, wherein said end piece (100) is made of metal material.

12. The end piece (100) according to claim 11, wherein said end piece (100) is configured to be weldable onto said flap.

13. The end piece (100) according to any one of claim 8-12, wherein said upper and/or lower flanges (110, 122) are attached to a base section (124, 126) of said end piece (100) with at least one screw joint (132).

14. The end piece (100) according to any one of claim 8-12, wherein said upper flange (100) is provided with a sloping angle with respect to the lower flange (122) which is less than 10 degrees.

15. The end piece according to claim 14, wherein said sloping angle of said upper flange (100) is essentially the same as a sloping angle of an upper surface (270) of said flap section (200) with respect to a lower surface (280) of said flap section (200).

16. A flap comprised in a ship access ramp comprising an end piece (100) according to any one of claim 8-15.

17. The flap according to claim 20, further comprising a flap section (200) according to any one of claim 1-7.

18. A kit comprising a flap section according to any one of claim 1-7 and an end piece according to any one of claim 8-15.
